Europäisches Patentamt

(19) European Patent Office

Office européen des brevets

(11) Publication number : **0 468 941 A2**

# (12) EUROPEAN PATENT APPLICATION

(21) Application number : **91830334.8**

(22) Date of filing : **26.07.91**

(51) Int. Cl.$^5$ : **B60R 16/02**

(30) Priority : **27.07.90 IT 2110090**

(43) Date of publication of application :
**29.01.92 Bulletin 92/05**

(84) Designated Contracting States :
**AT BE CH DE DK ES FR GB GR IT LI LU NL SE**

(71) Applicant : **Bonavigo, Orlando**
**Via Tolstoi, 2**
**I-20051 Limbiate (Milano) (IT)**

(72) Inventor : **Bonavigo, Orlando**
**Via Tolstoi, 2**
**I-20051 Limbiate (Milano) (IT)**

(74) Representative : **Adorno, Silvano et al**
**c/o SOCIETA' ITALIANA BREVETTI S.p.A. Via**
**Carducci, 8**
**I-20123 Milano (IT)**

(54) **A device for checking the sensors and the regularity of electrical connections in motor vehicle equipment.**

(57)  A device for checking the sensors and the electrical connections in a motor vehicle control system, particularly a suspension control system, and comprising a plurality of sensors connected to a control central unit, comprising a circuit (STZ) for checking the functionality of the steering wheel sensor ; a circuit (FR) for checking the speed sensor ; and a circuit for checking the line continuity comprising a plurality of LED diodes (A1 - A13), each connectable in series with an associated sensor.

Fig.1

EP 0 468 941 A2

The present invention concerns a device for checking the sensors and the regularity of electrical connections in motor vehicle equipments, particularly but not limitatedly of the several components of an automatically controlled suspension system.

Recently there has been an increasing use in motor vehicles for the transport of goods and people of electronic systems aimed to improve the vehicle safety and performance, as well as to reduce the fuel comsumption and render more comfortable the drive or the travel in general.

With the increasing complexity of the onboard systems, it has become necessary to carry out quick diagnosis of the durable efficiency of such systems, both during the maintenance and/or repair operations, and for ensuring the performance in time.

For example, a currently employed system for checking the suspensions of a motor vehicle comprises a control unit, usually including a microprocessor, that receives signals from a plurality of sensors that are mounted onboard the motor vehicle and according to a more or less flexible programming generates electrical signals that are able to change the adjustment of the vehicle shock absorbers in real time, acting e.g. on solenoid valves associated with hydraulic shock absorbers.

Since these systems are relatively "smart" and provided with wide capabilities of programming the drive conditions, a large number of sensors is used to detect the parameters that are useful for an evaluation of the drive conditions.

Typically a system of this kind comprises sensors of the motor vehicle speed, of the opening of the throttle valve and of the steering wheel position, etc.

Most of these sensors work under operating conditions that are quite severe due to their location in the motor vehicle, e.g. because of high temperatures and/or large thermal changes, vibrations and impacts, humidity and an environment polluted by reactive substances. Therefore, even by using sensors that are properly built and dimensioned, a certain fault rate, or more generally a malfunction rate is unavoidable.

Moreover, also the electrical connecting wires running through the vehicle have a considerable length and moreover runs in an environment that is not always protected enough, so that also the break of an electrical connection due to several reasons such as an oxidation of the connector or a physical cutoff, is a phenomenon to be taken into account when aiming to maintain a high efficiency of the motor vehicle.

These systems are generally designed with a so called intrinsic safety, or are anyhow capable of automatically controlling a given number of malfunctions among which, for example, the lack of signal from a sensor, or the interruption of an electrical connection, and causing only a worsening of the adjustment conditions that some time in not even clearly perceived by the driver.

This implies nevertheless a degradation of the motor vehicle performance and this defect has to be eliminated through controls and checkouts capable of locating in reasonably short times and reliably, the serviceability of the sensors and/or possible interruptions of the electrical connections and/or wiring of a given system.

Similar considerations apply to other electrical and electronic control systems of the motor vehicle, e.g. the ignition, the fuel injection, the brake control systems, etc.

Presently to this aim there are used general purpose programmable apparatuses that nevertheless exhibit several drawbacks.

Such apparatuses are costly and complex and are justified only for large specialized servicing centers, and require highly trained personnel for carrying out the predetermined check sequences. Moreover the connections to be set up to the system under test are so many and require long times which means that they are costly.

It is therefore an object of the present invention that of overcoming the above mentioned shortcomings and drawbacks, and more particularly to provide a check device that is cheap and very easy and quick to be used, so that it can be employed also in small repair shops and by not particularly trained personnel, thus allowing for a checkout that is easy, quick, available at many servicing points and of low cost.

Such objects are accomplished though the invention that consists of a device for the visual checking the sensors and the electrical connections of a control system in a motor vehicle and comprising a plurality of sensors connected to a control central unit, characterized in that such check device comprises a voltage feeder circuit; a circuit for checking at least one sensor; and a circuit for checking the line continuity including at least one silicon controlled rectifier, the or each silicon controlled rectifier being connectable to an associated sensor.

Further advantageous characteristics are the objects of the dependent claims.

The invention will now be described with more details, with reference to preferred but non-limiting embodiments, illustrated in the attached drawings, in which:

Fig. 1 schematically shows a suspension check system mounted on a motor vehicle;

Fig. 2 shows the external appearance of the device according to the invention;

Fig. 3 is an electric diagram of a preferred embodiment of the device according to the invention for the suspension control; and

Fig. 4 is an electric diagram of an embodiment of the device according to the invention capable of verifying other vehicle systems.

In the following the invention will be illustrated in details with reference to the checkout of the suspension control system of a motor vehicle, the scope of the invention not being limited to such application.

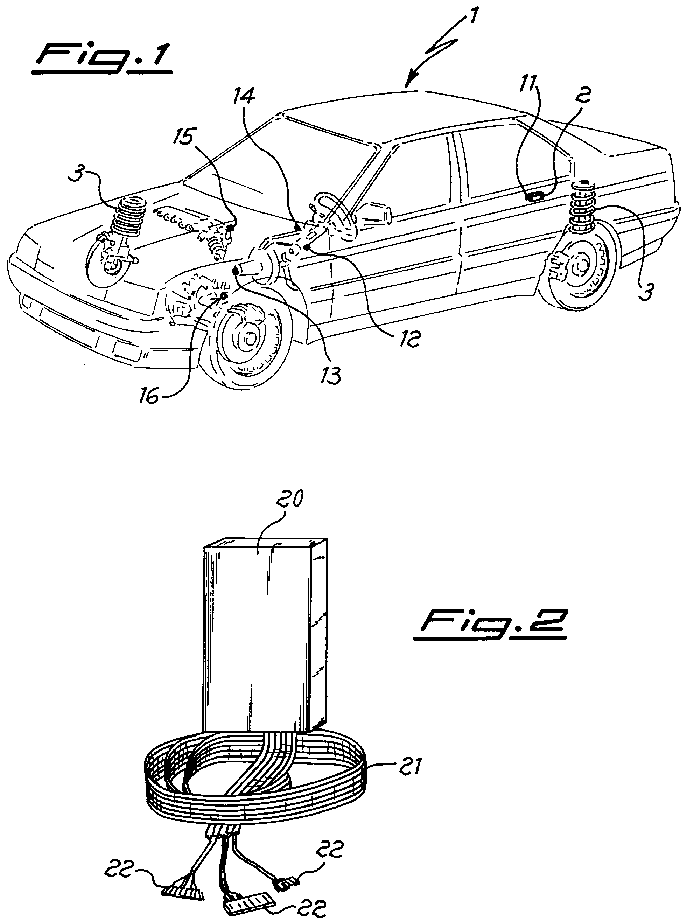

Fig. 1 schematically illustrates the arrangement of a control system for the suspensions of a motor vehicle 1, comprising a central unit 2 housed in the luggage van, four hydraulic shock absorbers 3 (only two shown in the Figure), and a plurality of sensors. The central unit 2 can be of different types and provides for different operating modes that are not relevant to the purpose of the present invention; therefore the central unit will not be described further.

Thre are provided six sensors in the suspension control system illustrated in Fig. 1, namely:

– a sensor 11 of the vertical acceleration or accelerometer that is fastened to the box containing the central unit 2 and housed in the luggage van; the sensor is of the type exhibiting a change of electric resistance as a function of the acceleration to which it is subjected;

– a sensor 12 of the steering wheel angle and the rotation speed of the steering wheel; such sensor is fastened to the steering column and comprises three photodiodes emiting electric pulses as a function of the rotation speed and the angular position of the steering column;

– a braking sensor 13 mounted on the front portion of the brake pump; such sensor is of the ON/OFF type, that is it closes an electric circuit when the pressure in the hydraulic circuit increases due to the actuation of the brake pedal, and opens such electric circuit when the pressure decreases below a predetermined level;

– a tachymeter sensor 14 located on the gearbox (transmission) and transmitting information about the instant speed of the motor vehicle;

– a sensor 15 of the throttle valve; it is located on the throttle body and closes a pair of contacts when the valve opening exceeds a predetermined value, e.g. 20°;

– a gearbox sensor 15 made up by a microswitch mounted on the gearbox which signals that the first or the second gear is engaged.

The signals from these sensors are applied to the central unit 2 by suitable wiring that are not illustrated in details for simplicity sake, and the central unit generates signals that are applied to four solenoid valves (not shown) controlling the shock absorbers 3. Indicatively the length of such wired connections is in the order of 30 meters.

Fig. 2 shows the external appearance of the device according to the invention. Such device has the shape of a case 20 provided with a cable extension 21 for allowing the possibility of making a diagnosis from the driver seat. Such extension is soldered to the circuit of the central unit and terminates with three connectors to be fitted into the existing electrical system.

The size of the device and the connectors arrangement correspond to those of the control central unit 2 of the suspensions plant so that in order to carry out the diagnosis the device can temporarily replace the central unit, both electrically and mechanically.

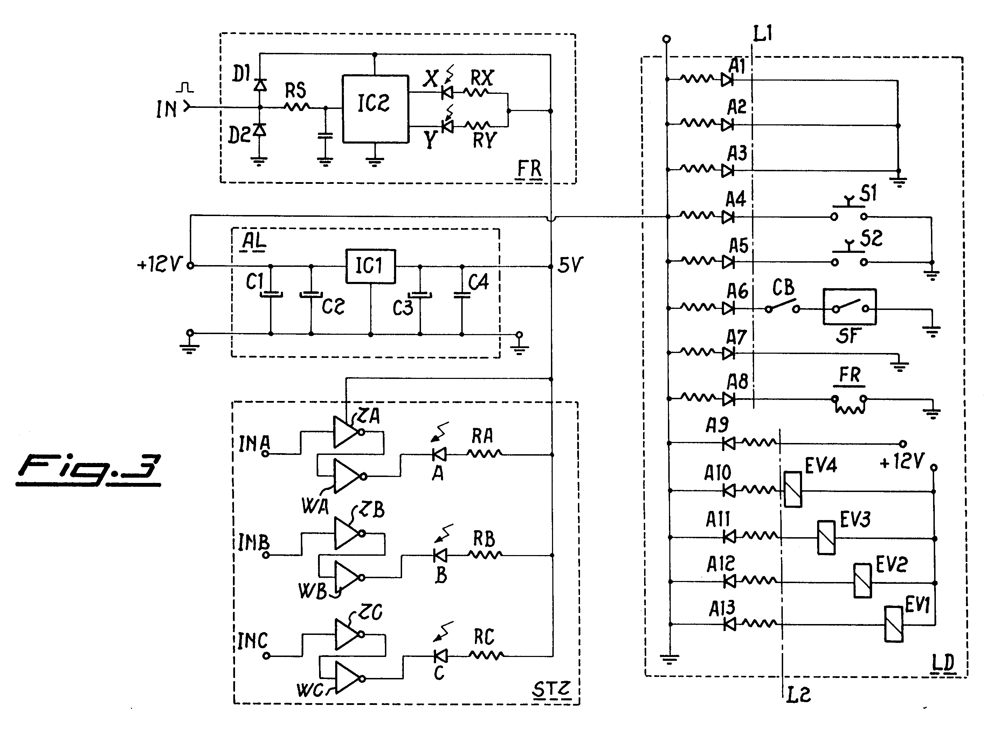

Fig. 3 shows a circuit diagram of the device that is divided into four blocks or main circuits: AL, STZ, FR and LD.

Block AL is a voltage reducer or power supply having its inputs connected to the positive terminal of the car battery (+12V) and to the the ground, and supplies a 5 V output voltage adapted to energize a portion of the device circuitry.

The power supply block AL comprises four capacitors C1 to C4 of the electrolytic type and an integratec circuit voltage regulator IC1 supplying a stabilized voltage of 5 V. The integrated circuit IC1 can be of the type known as 7805.

Block STZ accomplishes a verify of the functionality of the steering wheel sensor and comprises three branches, each comprising an input (IN A, IN B, IN C) receiving the pulses from the corresponding photodiode of the steering wheel sensor, two amplifiers (ZA, WA; ZB, WB; ZC, WC) driving corresponding LED diodes A, B and C in series with limiting resistors RA, RB and RC, respectively.

Preferably, the LED diode C has a color different from that of the other two diodes, for example orange, whereas LED diodes A and C are yellow. The circuit is fed by the 5 V voltage supplied by AL and the amplifiers can be, for example, of the type known as SN 74HC 15.

When all the three LED diodes are on, the signal is centered, whereas in case only the LED diode B is on, the signal is within the allowed tolerance. By rotating by a few degrees the steering wheel to the right or to the left, LED diodes A and C, respectively, go on in sequence.

Block FR verifies the functionality of the speed sensor that supplies pulses to the input IN of such block. The circuit comprises a pair of diodes D1 and D2 connected between the input and the +5 V supply voltage and the ground, respectively. The input IN is further connected through a resistor RS to an integrated circuit IC2 that reduces the frequency of the square wave from the speed sensor in order to render it visible through the LED diode, at the outputs of which there are connected two LED diodes X and Y, respectively, in series with corresponding resistors RX and RY. The circuit verifies the continuity of the line and causes the alternating lightning of the two LED diodes during the first meters of travel.

Block LD comprises thirteen pilot lamps made up by LED diodes A1 - A13. A resistor that for simplicity of illustration is shown without any reference, is connected in series with each diode in a known manner for limiting the circulating current. Moreover in block LD the dashed lines L1-L2 shows the physical separation with respect to the sensor elements that have been illustrated in Fig. 3, for an easier understanding.

Diodes A1-A3 are parally connected between the +12 V power supply and three points of the bodywork. When they are lighted this means that all the three lines are electrically in contact with the motor vehicle chassis.

Diode A4 and diode A5 are connected in series with pushbutton switches S1 and S2, respectively, and their lighting, at the same time with the closure of the corresponding switch, allows for checking the line continuity of the selected drive mode (rigid or soft).

Diode A6 is connected in series with the gearbox switch CB and that of the throttle valve SF. When the ignition key is turned on, such diode lights thus indicating the battery negative line. Diode A7 indicates the negative line for the electronic circuit of the control central unit of the negative.

Diode A8, in series with the brake sensor FR, lights when either the first or the second gear is engaged and the accelerator pedal is fully depressed.

Diode A9 checks the brake line and sensor. It lights at about 50% of its complete brilliancy and by pressing the brake pedal, the brilliancy returns to the normal level.

LED diodes A10 to A13 are serially connected with the solenoid valves EV1 - EV4 and are used for checking the line to as well as any malfunction of a solenoid valve.

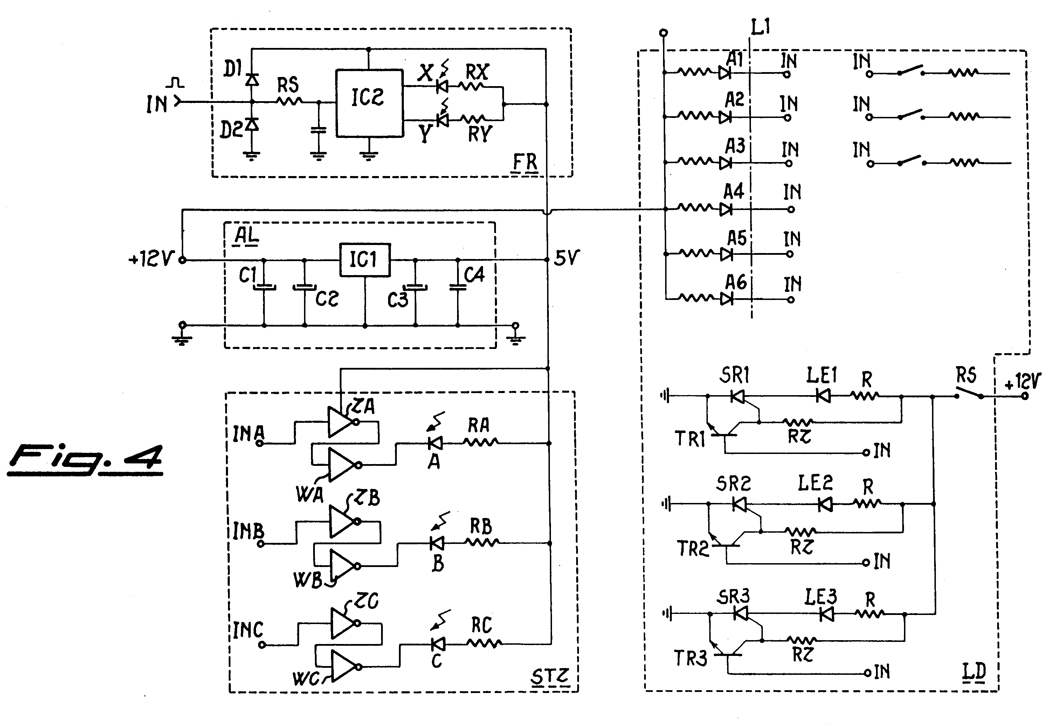

The embodiment illustrated in Fig.4 is similar to that of Fig. 3, but for the circuit LD comprising a first series of branches A1-A6 similar to those of the previous embodiment and a second series of LED diodes DE1 - DE3 each connected in series with a thyristor or SCR device (silicon controlled rectifier) and a transistor TR1 - TR3 in the common emitter configuration. This embodiment is adapted for the visual checking of ignition systems, fuel injection systems, braking systems and in general of any system connected to the central control unit of the vehicle.

From the above description it is clear that the device according to the invention has a simple and cheap construction, is easily adaptable to different models of control systems, and is quite easy to be employed since it must only temporarily replace the control central unit for the checkings. More particularly, the illustrated device is capable of checking eighteen functions, but of course such number can change in accordance with the car models or of other requirements.

The invention can be actuated with modifications and changes that will be evident to those skilled in the art and are to be considered within the scope of the invention.

## Claims

1. A device for the visual checking the sensors and the electrical connections of a control system in a motor vehicle and comprising a plurality of sensors connected to a control central unit, characterized in that such check device comprises a voltage feeder circuit; a circuit for checking at least one sensor; and a circuit for checking the line continuity including at least one silicon controlled rectifier, the or each silicon controlled rectifier being connectable to an associated sensor.

2. A device as claimed in claim 1, characterized in that said feeder circuit (AL) is adapted to reduce the voltage supplied by the vehicle battery; and said circuit (LD) for checking the line continuity comprises a plurality of pilot lamps (A1 - A13), each connectable in series with an associated sensor; and in that it comprises a circuit (STZ) for checking the functionality of a steering wheel sensor and a circuit (FR) for checking a speed sensor.

3. A device as claimed in claim 2, characterized in that said circuit for checking the functionality of the steering wheel sensor comprises three branches, each comprising an input (IN A, IN B, IN C) receiving pulses from the corresponding photodiode of the steering wheel sensor, and at least an amplifier (ZA, WA; ZB, WB; ZC, WC) driving a corresponding LED diode (A, B, C).

4. A device as claimed in claim 3, characterized in that said LED diodes (A, B, C) are the pilot lamps of the efficiency checking, and one of said LED diode (C) has a color different from that of the other two diodes.

5. A device as claimed in claim 2, particularly for checking the suspension control system of the motor vehicle, characterized in that said circuit (FR) that checks the functionality of the speed sensor comprises a pair of diodes (D1, D2) connected between the input (IN) of the circuit and the reduced voltage supply and the ground, respectively, and in that said input (IN) is connected through a resistor (RS) to an integrated circuit (IC2) at the outputs of which there are connected two LED diodes (X, Y) that alternatively lights during the first meters of travel to indicate the efficiency of the associated sensor.

6. A device as claimed in claim 2, characterized in that said circuit (LD) for checking the line continuity on the whole comprises thirteen pilot lamps made up by LED diodes (A1 - A13).

7. A device as claimed in claim 6, characterized in that three of said LED diodes (A1-A3) are parallely connected between the +12 V power supply and three points of the bodywork for indicating that all the three lines are electrically in contact with the motor vehicle chassis.

8. A device as claimed in claim 7, characterized in that two other diodes (A4, A5) are connected in series with pushbutton switches (S1, S2) for checking the line continuity of the selected drive mode (rigid or soft).

9. A device as claimed in claim 7, characterized in that one of said diodes (A6) is connected in series with a switch (CB) provided on the gearbox and one (SF) on the throttle valve.

10. A device as claimed in claim 7, characterized in that one LED diode (A8) is connected in series with a brake sensor (FR), and that it lights when the accelerator pedal is fully depressed, after either the first or the second gear has been engaged.

11. A device as claimed in claim 7, characterized in that one diode (A9) checks the brake line and sensor, and lights at about 50% of its complete brilliancy, and reaches the complete brilliancy when the brake pedal is pressed.

12. A device as claimed in claim 7, characterized in that three LED diodes (A10 - A13) are serially connected with as many solenoid valves (EV1 - EV4), and such diodes are used for checking the line, as well as the malfunction, if any, of a solenoid valve.

13. A device as claimed in any of the preceding claims, characterized in that its sizes, the shape of the fins and the outer connectors correspond to those of the control central unit (2) of the suspension plant so that said device can temporarily replace both mechanically and electrically such central unit, to accomplish the diagnosis thereof.

_Fig.1_

_Fig.2_

Fig.3

EP 0 468 941 A2

Fig.4